# EUROPÄISCHE PATENTSCHRIFT

(11) **EP 3 750 780 B1**
(45) Veröffentlichungstag und Bekanntmachung des Hinweises auf die Patenterteilung: **23.06.2021**
(21) Anmeldenummer: 19179564.0
(22) Anmeldetag: 12.06.2019
(51) Int. Cl.: B62D 1/16

(54) **LENKSÄULENDURCHFÜHRUNG EINES LENKBAREN FAHRZEUGS**
STEERING COLUMN FEEDTHROUGH OF A STEERABLE VEHICLE
PASSAGE DE COLONNE DE DIRECTION D'UN VÉHICULE DIRIGEABLE

(43) Veröffentlichungstag der Anmeldung: 16.12.2020
(73) Patentinhaber: Etimex Technical Components GmbH, 89616 Rottenacker (DE)
(72) Erfinder: Wirries, Manfred, 31180 Giesen (DE)
(74) Vertreter: Rothkopf, Ferdinand

(56) Entgegenhaltungen:
- EP-A1- 2 842 832
- DE-A1-102009 055 759
- DE-A1-102011 105 449
- JP-A- H11 351 385
- US-A1- 2013 057 015
- US-A1- 2014 099 049
- US-A1- 2017 219 100

## Beschreibung

### Hintergrund der Erfindung

Die Erfindung betrifft eine Lenksäulendurchführung eines lenkbaren Fahrzeugs zum abgedichteten Durchführen einer sich axial erstreckenden Lenksäule durch eine Karosserie des Fahrzeugs, mit einem Karosserieflansch zum Koppeln an die Karosserie, mit einem Lenksäulenlager zum Umgreifen der Lenksäule und mit drei Bälgen zum Verbinden des Lenksäulenlagers mit dem Karosserieflansch, wobei mit den drei Bälgen zwei, axial hintereinander angeordnete Dämpfungskammern ausgebildet sind.

Die gattungsgemäße Lenksäulendurchführung wird bei Fahrzeugen, wie Personenkraftwagen, verwendet um die zugehörige Fahrgastzelle vor einem Eindringen von Spritzwasser und Verunreinigungen aus dem Inneren des zugehörigen Motorraumes heraus zu schützen. Dabei gewährleistet die Lenksäulendurchführung eine drehbewegliche Aufnahme der Lenksäule bzw. Lenkspindel innerhalb eines durch die Karosserie führenden Lenksäulendurchbruches. Derartige Lenksäulendurchführungen sind aus EP 2 842 832 A1 und DE 10 2011 105 449 A1 bekannt. Diese beiden Schriften offenbaren die vorkennzeichnenden Merkmale des Anspruchs 1.

Mit den genannten Bälgen ist eine elastische Aufnahme geschaffen, mittels der zugleich eine radiale Bewegung der Lenksäule innerhalb des Lenksäulendurchbruches möglich ist. Außerdem dient die derart gestaltete Elastomeraufhängung regelmäßig auch der akustischen Entkopplung der in der Lenksäulendurchführung gehaltenen Lenksäule von dem an der Karosserie ortsfest angebrachten Karosserieflansch.

Da verschiedene Fahrzeugmarken, deren Klassen, Typen und Serien eine Vielzahl verschieden ausgebildeter Karosserien und Lenksäulen hervorbringen, ergibt sich eine ebenso große Anzahl von Lenksäuleneinbausituationen, denen durch die Anfertigung bauserienspezifischer Baugruppen Rechnung getragen werden muss. Zur Herstellung jeder bauserienspezifisch ausgebildeten Baugruppe erfordert es jedoch Form- und Fügewerkzeuge, so dass die Herstellungskosten nachteilig hoch liegen.

Der Erfindung liegt die Aufgabe zugrunde, eine Lenksäulendurchführung eines lenkbaren Fahrzeugs zu schaffen, die besonders vielseitig einsetzbar und zugleich besonders kostengünstig herstellbar ist. Dabei ist es insbesondere ein Ziel die Lenksäulendurchführung auch besonders klein, also mit geringem Verbrauch von Bauraum zu gestalten.

Die Aufgabe ist erfindungsgemäß mit einer Lenksäulendurchführung eines lenkbaren Fahrzeugs zum abgedichteten Durchführen einer sich axial erstreckenden Lenksäule durch eine Karosserie des Fahrzeugs gelöst, mit einem Karosserieflansch zum Koppeln an die Karosserie, mit einem Lenksäulenlager zum Umgreifen der Lenksäule und mit drei Bälgen zum Verbinden des Lenksäulenlagers mit dem Karosserieflansch, wobei mit den drei Bälgen zwei, axial hintereinander angeordnete Dämpfungskammern ausgebildet sind, und wobei das Lenksäulenlager mit einem die drei Bälge axial verbindenden, hohlzylindrischen bzw. hülsenförmigen Lagergehäuse gestaltet ist.

Mit dem erfindungsgemäßen hohlzylindrischen Lagergehäuse ist ein zentrales Bauteil in der Lenksäulendurchführung geschaffen, an dem außenseitig die drei Bälge angekoppelt und innenseitig die Lenksäule anzuordnen ist. Dieses zentrale Bauteil stellt damit definierte Koppelungen bzw. Anbindungen sowohl an die Bälge als auch an die Lenksäule her.

Zugleich dient dieses zentrale, gehäusenförmige Bauteil als Leit- bzw. Führungselement, durch welches hindurch ganz gezielt jener Schall durchzuleiten ist, der vom Motorraum in die Fahrgastzelle hinein drängt. Dieser Schall ist dabei gezielt und in klar definierter Weise zu dämpfen bzw. dämmen. Die gesamte Auslegung und Berechnung der zu erzielenden Schall-Dämpfung bzw. SchallDämmung ist an diesem zentralen, gehäusenförmigen Bauteil vorzunehmen, was die dabei erforderlichen mathematischen, physikalischen und versuchstechnischen Verfahren besonders einfach gestaltet. Während bei herkömmlichen Verfahren viel Aufwand auf die schallrelevante Wechselwirkung diverser Bauteile aufzubringen war, kann erfindungsgemäß diese Tätigkeit im Wesentlichen auf das erfindungsgemäße hohlzylindrische Lagergehäuse beschränkt bleiben.

Die erfindungsgemäße Lenksäulendurchführung ist daher besonders einfach auszulegen. Zugleich kann die Lenksäulendurchführung besonders gut auch an bestehende fertigungstechnische Anforderungen bzw. Vorgaben angepasst werden. Daher sind auch die Herstellungskosten der erfindungsgemäßen Lenksäulendurchführung besonders gering.

Besonders vorteilhaft ist dabei das Lagergehäuse derart gestaltet, dass der genannte Schall durch das Lagergehäuse selbst, also im Bereich von dessen Wandung vom Motorraum in Richtung zur Fahrgastzelle geleitet wird. Das Lagergehäuse ist dabei vorzugsweise außenseitig an alle drei Bälge angekoppelt und innenseitig an mindestens einem Umfangsbereich an die Lenksäule angekoppelt. Der genannte Schall wird damit gezielt in jenen radialen Bereich der Lenksäulendurchführung geleitet, in dem sich das Lagergehäuse befindet. In diesem Bereich kann dann das Lagergehäuse gezielt zur Schalldämpfung und Schalldämmung angepasst sein. Vorzugsweise ist das Lagergehäuse dabei derart ausgebildet, dass der Schall, also die in Axialrichtung der Lenksäule laufenden Schallwellen in einem längsgerichteten schlangenförmigen bzw. wellenförmigen Verlauf axial durch die Wandung des Lagergehäuses geleitet werden. Die Wellenlänge dieses Verlaufs der Schallwellenführung ist dabei vorteilhaft gezielt anders lang gestaltet, als die Hauptwellenlängen der Schallwellen und deren Vielfaches. Die Schallwellen werden damit von der Schallwellenführung gezielt in das Material des Lagergehäuses eingeleitet, wo sie besonders stark absorbiert und gedämpft werden.

Gemäß der Erfindung ist ferner das Lagergehäuse mit Öffnungen durchsetzt, die von radial innen nach radial außen in die beiden Dämpfungskammern führen. Durch die Öffnungen hindurch werden die Druckwellen des genannten Schalls gezielt in die beiden Dämpfungskammern hinein geleitet, wo diese Schallwellen zwischen den jeweils beteiligten, flexibel nachgiebigen Bälgen durch deren Verformung gedämpft werden.

Bei der erfindungsgemäßen Lenksäulendurchführung ist vorteilhaft das Lagergehäuse radial innen mit einem am Umfang umlaufenden ersten Steg versehen, der axial zwischen den Dämpfungskammern angeordnet und radial bis an die Lenksäule reichend gestaltet ist. Mit dem Steg kommt das Lagergehäuse dann nahe an die Lenksäule, so dass dort weitgehend keine Fluidströmung in Axialrichtung mehr möglich ist. Somit ist in axialer Richtung eine Abdichtung im Hinblick auf Gasaustausch und Flüssigkeitsaustausch zwischen dem Motorraum und der Fahrgastzelle geschaffen. Zugleich werden Schallwellen gezielt vor und durch den Steg hindurch gedämpft bzw. gedämmt.

Der erste Balg und der dritte Balg sind vorteilhaft mit dem Lagergehäuse mittels einer Überpressung gekoppelt. Diese Überpressung ist insbesondere herzustellen, indem der jeweilige Balg über das Lagergehäuse gestülpt wird. Die Überpressung ist insbesondere kraftschlüssig und auch formschlüssig. Mit der derartigen Kopplung ist eine Gasdichtheit und eine starke mechanische Anbindung zwischen den Bälgen und dem Lagergehäuse über die Lebensdauer der Lenksäulendurchführung hinweg gewährleistet.

Der zweite Balg ist vorzugsweise mit dem Lagergehäuse kraft- und/oder formschlüssig gekoppelt. Diese Koppelung ist fertigungstechnisch einfacher herzustellen und gewährleistet dennoch, dass der genannte Schall ausreichend stark in und durch das erfindungsgemäße Lagergehäuse geleitet wird.

Radial innen in dem erfindungsgemäßen Lagergehäuse ist vorteilhaft mindestens ein erster Gleitring eingesetzt, der insbesondere mit einem rechteckigen Querschnitt gestaltet ist. Unter rechteckiger Querschnitt wird dabei eine im Wesentlichen rechteckige Form verstanden, die gegebenenfalls kleine Formabweichungen, wie etwa eine leichte Entformungsschräge, aufweisen kann. Mit dem derartigen Gleitring und dessen Steg sind die genannten Schallwellen axial durch das Lagergehäuse hindurch und gezielt von der Oberfläche der Lenksäule wegzuleiten. Die Schallwellen können damit axial wellenförmig von der Lenksäule radial weggeleitet und nachfolgend wieder zu der Lenksäule radial hingeleitet werden.

Der erste Gleitring ist ferner vorzugsweise von einem ersten ringförmigen Lagerdeckel in dem Lagergehäuse axial zurückgehalten, wobei der erste Lagerdeckel radial innen mit einem am Umfang umlaufenden zweiten Steg versehen ist, der radial bis an die Lenksäule reichend gestaltet ist. Der derartige Lagerdeckel schließt ebenfalls direkt bzw. unmittelbar an die Lenksäule an und lenkt damit anströmende Schallwellen gezielt nach radial außen in das Material des Lagergehäuses hinein.

Der erste Balg und der zweite Balg sind vorteilhaft als einstückiges Bauteil gestaltet. Eine derartige "doppelwandige" Balganordnung ist fertigungs-technisch kostengünstig herzustellen. Ferner ist eine solche Balganordnung an dem zugehörigen Lagergehäuse montagetechnisch vorteilhaft zu platzieren, insbesondere wenn der erste Balg mittels Überpressung und der zweite Balg form- oder kraftschlüssig zu montieren ist.

Besonders bevorzugt sind bei der erfindungsgemäßen Lenksäulendurchführung die Bälge aus einem elastischen Material, insbesondere aus Ethylen-Propylen-Dien-Kautschuk (EPDM), das Lagergehäuse aus einem nicht-elastischen Material, insbesondere Polyoxymethylen (POM), der erste Gleitring aus einem nicht-elastischen Material, insbesondere Polybutylenterephthalat (PBT) und/oder der erste Lagerdeckel aus einem nicht- elastischen Material, insbesondere Polyphthalamid (PPA), gestaltet ist.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine Seitenansicht eines Ausführungsbeispiels einer erfindungsgemäßen Lenksäulendurchführung,
- Fig. 2: den Schnitt II - II gemäß Fig. 1 und

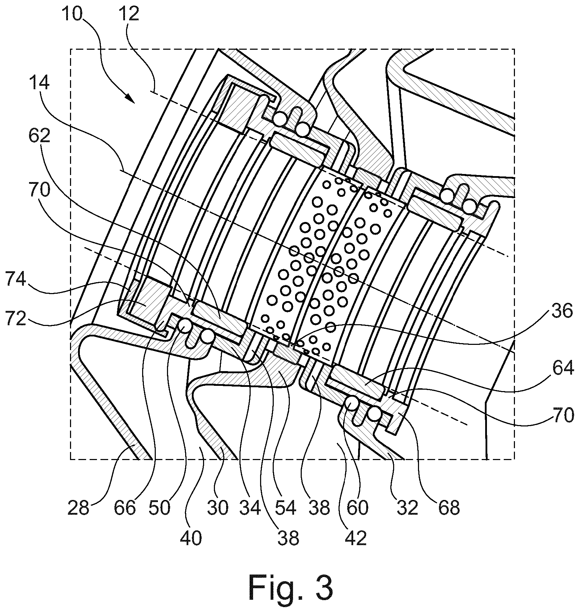

- Fig. 3: das Detail III gemäß Fig. 2.

### Detaillierte Beschreibung des Ausführungsbeispiels

In den Fig. ist eine Lenksäulendurchführung 10 einer Lenksäule 12 dargestellt, wobei sich die Lenksäule 12 längs einer Achse 14 erstreckt. Mittels der Lenksäulendurchführung 10 ist die Lenksäule 12 drehbar aber zugleich abgedichtet durch ein Blech einer Karosserie 16 geführt. Das Blech der Karosserie 16 erstreckt sich dabei zwischen einem Motorraum 18 und einem Innenraum bzw. Fahrgastraum 20.

Die Lenksäulendurchführung 10 ist mit einem ringförmigen Karosserieflansch 22 an die Karosserie 16 mittels dreier (nicht dargestellter) Schrauben ortsfest und abdichtend anzukoppeln. An den Karosserieflansch 22 schließt eine Manschettenanordnung bzw. Balganordnung 24 an, in deren Zentrum sich ein Lenksäulenlager 26 befindet. In dem Lenksäulenlager 26 ist dann die Lenksäule 12 selbst drehbar gelagert. Das Lenksäulenlager 26 ist so innerhalb des Karosserieflansches 22 mittels der dabei elastischen Balganordnung 24 in radialer und auch axialer Richtung geringfügig verschiebbar.

Die Balganordnung 24 ist mit einem ersten Balg 28, einem zweiten Balg 30 und einem dritten Balg 32 gebildet, wobei diese Bälge 28, 30 und 32 dabei in axialer Richtung scheibenförmig auf einander folgend in einer Reihe angeordnet sind. Die Bälge 28, 30 und 32 sind aus dem elastischen Material Ethylen-Propylen-Dien-Kautschuk (EPDM) hergestellt. Radial außen sind die Bälge 28, 30 und 32 am Karosserieflansch 22 miteinander abgedichtet verbunden. Radial innen sind die Bälge 28, 30 und 32 mittels eines die Bälge 28, 30 und 32 axial verbindenden, hohlzylindrischen Lagergehäuses 34 gekoppelt. Das Lagergehäuse 34 ist aus dem im Vergleich zu den Bälgen 28, 30, 32 steifen Material Polyoxymethylen (POM) hergestellt.

Das Lagergehäuse 34 ist als eine zylindrische Hülse bzw. ein im Querschnitt kreisförmiges Rohr gestaltet, in dessen axialer Mitte sich ein nach innen abstehender, bis an die Lenksäule 12 ragender und am Umfang umlaufender erster Steg 36 befindet.

In axialer Richtung rechts und links von dem Steg 36 sind am inneren Umfang des Lagergehäuses 34 Öffnungen 38 in Reihen regelmäßig verteilt ausgebildet. Die Öffnungen 38 führen vom Inneren des Lagergehäuses 34 nach radial außen in eine erste Dämpfungskammer 40 und eine zweite Dämpfungskammer 42. Die Dämpfungskammer 40 ist dabei mittels der beiden Bälge 28 und 30 begrenzt. Die Dämpfungskammer 42 ist von den beiden Bälgen 30 und 32 gebildet.

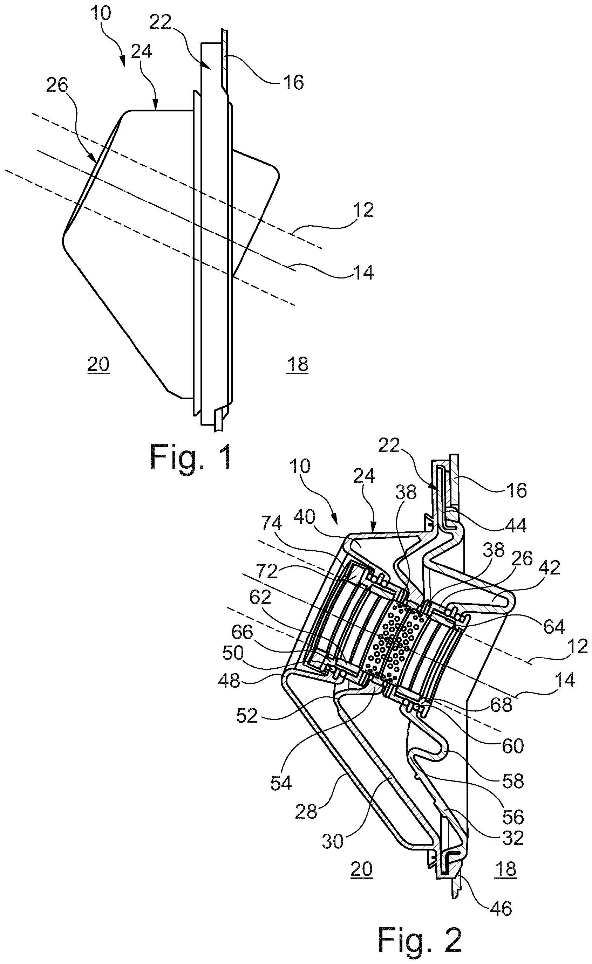

Die beiden Bälge 28 und 30 sind dabei zu einem einstückigen Bauteil bzw. einem Doppelbalg verbunden. Dazu ist im Bereich des Karosserieflansches 22 ein metallischer Stützring 44 vorgesehen, der in einem Umgriffsbereich 46 vom radial äußeren Teil dieses Doppelbalgs umfasst ist. Von dem Umgriffsbereich 46 ist der erste Balg 28 über eine erste Falte bzw. Sicke 48 zu einem ersten Ankoppelbereich 50 geführt, an dem er auf das Lagergehäuse 34 an dessen bezogen auf Fig. 2 linken axialen Endbereich gepresst ist. Der in den Fig. als Kreis dargestellte Ankoppelbereich 50 markiert dabei die dort hergestellte, eine mittlere Rippe am Lagergehäuse 34 übergreifende Überpressung. Von dem Umgriffsbereich 46 ist ferner der zweite Balg 30 über eine zweite Sicke 52 zu einem zweiten Ankoppelbereich 54 in die axiale Mitte des Lagergehäuses 34 geführt. Dort ist der zweite Balg 30 mittels einer form- und kraftschlüssigen Verbindung radial außen auf das Lagergehäuse 34 aufgezogen. Am Umgriffsbereich 46 ist ferner der dritte Balg 32 mit dem Stützring 44 gekoppelt. Der Balg 32 ragt von dort über eine dritte Sicke 56 und eine vierte Sicke 58 zu einem dritten Ankoppelbereich 60 geführt. An dem dritten Ankoppelbereich 60 ist der dritte Balg 32 auf das Lagergehäuse 34 an dessen bezogen auf Fig. 2 rechten axialen Endbereich gepresst. Der in den Fig. als Kreis dargestellte Ankoppelbereich 60 markiert dabei die dort hergestellte, eine mittlere Rippe am Lagergehäuse 34 übergreifende Überpressung.

Im Inneren des Lagergehäuses 34 sind axial außen neben den Öffnungen 38 zwei Vertiefungen bzw. Absätze vorgesehen, in die ein erster Gleitring 62 bzw. ein zweiter Gleitring 64 eingesetzt sind. Die Gleitringe 62 und 64 sind aus Polybutylenterephthalat (PBT) mit je einem rechteckigen Querschnitt gestaltet und ragen radial innen bis an die Lenksäule 12.

Axial außen sind die Gleitringe 62 und 64 mittels eines ersten ringförmigen Lagerdeckels 66 bzw. eines zweiten ringförmigen Lagerdeckels 68 in dem Lagergehäuse 34 zurückgehalten. Dabei sind die Lagerdeckel 66 bzw. 68 an ihrem axial inneren Ende jeweils mit einem nach radial innen bis zur Lenksäule 12 reichenden zweiten Steg 70 versehen.

Axial außen von dem zum Fahrgastraum 20 weisenden, ersten Lagerdeckel 66 ist ferner noch ein ebenfalls bis zur Lenksäule 12 ragenden Filzring 72 vorgesehen, der dort mittels eines Halterings 74 zurückgehalten ist. Der erste Lagerdeckel 66 und der Haltering 74 sind dabei aus Polyoxymethylen (POM) hergestellt, wohingegen der zum Motorraum 18 gewandte zweite Lagerdeckel 68 aus Polyphthalamid (PPA) hergestellt ist.

### Bezugszeichenliste

- 10: Lenksäulendurchführung
- 12: Lenksäule
- 14: Achse
- 16: Karosserie
- 18: Motorraum
- 20: Fahrgastraum
- 22: Karosserieflansch
- 24: Balganordnung
- 26: Lenksäulenlager
- 28: erster Balg
- 30: zweiter Balg
- 32: dritter Balg
- 34: Lagergehäuse
- 36: erster Steg
- 38: Öffnung
- 40: erste Dämpfungskammer
- 42: zweite Dämpfungskammer
- 44: Stützring
- 46: Umgriffsbereich
- 48: erste Sicke bzw. Falte
- 50: erster Ankoppelbereich
- 52: zweite Sicke
- 54: zweiter Ankoppelbereich
- 56: dritte Sicke
- 58: vierte Sicke
- 60: dritter Ankoppelbereich
- 62: erster Gleitring
- 64: zweiter Gleitring
- 66: erster Lagerdeckel
- 68: zweiter Lagerdeckel
- 70: zweiter Steg
- 72: Filzring
- 74: Haltering

## Patentansprüche

1. Lenksäulendurchführung (10) eines lenkbaren Fahrzeugs zum abgedichteten Durchführen einer sich axial erstreckenden Lenksäule (12) durch eine Karosserie (16) des Fahrzeugs, mit einem Karosserieflansch (22) zum Koppeln an die Karosserie (16), mit einem Lenksäulenlager (26) zum Umgreifen der Lenksäule (12) und mit drei Bälgen (28, 30, 32) zum Verbinden des Lenksäulenlagers (26) mit dem Karosserieflansch (22), wobei mit den drei Bälgen (28, 30, 32) zwei, axial hintereinander angeordnete Dämpfungskammern (40, 42) ausgebildet sind,
wobei das Lenksäulenlager (26) mit einem die drei Bälge (28, 30, 32) axial verbindenden, hohlzylindrischen Lagergehäuse (34) gestaltet ist, **dadurch gekennzeichnet, dass** das Lagergehäuse (34) mit Öffnungen (38) durchsetzt ist, die von radial innen nach radial außen in die beiden Dämpfungskammern (40, 42) führen.

2. Lenksäulendurchführung nach Anspruch 1,
**dadurch gekennzeichnet, dass** die Öffnungen (38) in Reihen am Umfang des Lagergehäuses (34) verteilt angeordnet sind.

3. Lenksäulendurchführung nach Anspruch 1 oder 2,
**dadurch gekennzeichnet, dass** das Lagergehäuse (34) radial innen mit einem am Umfang umlaufenden ersten Steg (36) versehen ist, der axial zwischen den Dämpfungskammern (40, 42) angeordnet und radial bis nahe an die Lenksäule (12) reichend gestaltet ist.

4. Lenksäulendurchführung nach einem der Ansprüche 1 bis 3,
**dadurch gekennzeichnet, dass** der erste Balg (28) und der dritte Balg (32) mit dem Lagergehäuse (34) mittels einer Überpressung gekoppelt sind.

5. Lenksäulendurchführung nach einem der Ansprüche 1 bis 4,
**dadurch gekennzeichnet, dass** der zweite Balg (30) mit dem Lagergehäuse (34) kraft- und/oder formschlüssig gekoppelt ist.

6. Lenksäulendurchführung nach einem der Ansprüche 1 bis 5,
**dadurch gekennzeichnet, dass** radial innen in das Lagergehäuse (34) mindestens ein erster Gleitring (62, 64) eingesetzt ist, der insbesondere mit einem rechteckigen Querschnitt gestaltet ist.

7. Lenksäulendurchführung nach Anspruch 6,
**dadurch gekennzeichnet, dass** der erste Gleitring (62, 64) von einem ersten ringförmigen Lagerdeckel (66, 68) in dem Lagergehäuse (34) axial zurückgehalten ist, wobei der erste Lagerdeckel (66, 68) radial innen mit einem am Umfang umlaufenden zweiten Steg (70) versehen ist, der radial bis an die Lenksäule (12) reichend gestaltet ist.

8. Lenksäulendurchführung nach einem der Ansprüche 1 bis 7,
**dadurch gekennzeichnet, dass** der erste Balg (28) und der zweite Balg (30) als einstückiges Bauteil gestaltet sind.

9. Lenksäulendurchführung nach einem der Ansprüche 1 bis 8,
**dadurch gekennzeichnet, dass** die Bälge (28, 30, 32) aus einem elastischen Material, insbesondere aus Ethylen-Propylen-Dien-Kautschuk (EPDM), das Lagergehäuse (34) aus einem nicht-elastischen Material, insbesondere Polyoxymethylen (POM), der erste Gleitring (62, 64) aus einem nicht-elastischen Material, insbesondere Polybutylenterephthalat (PBT) und/oder der erste Lagerdeckel (66, 68) aus einem nicht-elastischen Material, insbesondere Polyphthalamid (PPA), gestaltet sind.

## Claims

1. Steering column feedthrough (10) of a steerable vehicle for the sealed passage of an axially extending steering column (12) through a body (16) of the vehicle, having a body flange (22) for coupling to the body (16), having a steering column bearing (26) for engaging around the steering column (12), and having three bellows (28, 30, 32) for connecting the steering column bearing (26) to the body flange (22), wherein there are formed with the three bellows (28, 30, 32) two damping chambers (40, 42) arranged axially one behind the other,
wherein the steering column bearing (26) is formed with a hollow cylindrical bearing housing (34) which axially connects the three bellows (28, 30, 32),
**characterised in that** the bearing housing (34) is passed through with openings (38) which lead from radially inside to radially outside into the two damping chambers (40, 42).

2. Steering column feedthrough according to claim 1,
**characterised in that** the openings (38) are arranged in rows distributed on the circumference of the bearing housing (34).

3. Steering column feedthrough according to claim 1 or 2,
**characterised in that** the bearing housing (34) is provided radially on the inside with a first web (36) running around the circumference, which first web is arranged axially between the damping chambers (40, 42) and is configured so as to reach radially close to the steering column (12).

4. Steering column feedthrough according to any one of claims 1 to 3,
**characterised in that** the first bellows (28) and the third bellows (32) are coupled with the bearing housing (34) by means of an overpressing.

5. Steering column feedthrough according to any one of claims 1 to 4,
**characterised in that** the second bellows (30) is coupled with the bearing housing (34) by a force-based and/or interlocking connection.

6. Steering column feedthrough according to any one of claims 1 to 5,
**characterised in that** there is inserted radially on the inside into the bearing housing (34) at least a first sliding ring (62, 64) which is configured in particular with a rectangular cross section.

7. Steering column feedthrough according to claim 6,
**characterised in that** the first sliding ring (62, 64) is axially retained in the bearing housing (34) by a first annular bearing cap (66, 68), wherein the first bearing cap (66, 68) is provided radially on the inside with a second web (70) running around the circumference, which second web is configured so as to reach radially to the steering column (12).

8. Steering column feedthrough according to any one of claims 1 to 7,
**characterised in that** the first bellows (28) and the second bellows (30) are configured as a one-piece component.

9. Steering column feedthrough according to any one of claims 1 to 8,
**characterised in that** the bellows (28, 30, 32) are formed of a resilient material, in particular of ethylene-propylene-diene rubber (EPDM), the bearing housing (34) is formed of a non-resilient material, in particular polyoxymethylene (POM), the first sliding ring (62, 64) is formed of a non-resilient material, in particular polybutylene terephthalate (PBT), and/or the first bearing cap (66, 68) is formed of a non-resilient material, in particular polyphthalamide (PPA).

## Revendications

1. Passage de colonne de direction (10) d'un véhicule dirigeable permettant le passage étanchéifié d'une colonne de direction (12) s'étendant dans le plan axial à travers une carrosserie (16) du véhicule, avec un flasque de carrosserie (22) pour le couplage à la carrosserie (16), avec un palier de colonne de direction (26) pour la mise en prise de la colonne de direction (12) et avec trois soufflets (28, 30, 32) pour la liaison du palier de colonne de direction (26) avec le flasque de carrosserie (22), deux chambres d'amortissement (40, 42) disposées l'une derrière l'autre dans le plan axial étant réalisées avec les trois soufflets (28, 30, 32) ;
le palier de colonne de direction (26) étant réalisé avec un carter de palier (34) en forme de cylindre creux reliant dans le plan axial les trois soufflets (28, 30, 32) ; **caractérisé en ce que** le carter de palier (34) est traversé par les ouvertures (38) allant, depuis l'intérieur dans le plan radial vers l'extérieur dans le plan radial, jusque dans les deux chambres d'amortissement (40, 42).

2. Passage de colonne de direction selon la revendication 1, **caractérisé en ce que** les ouvertures (38) sont disposées de façon répartie en rangées au niveau de la périphérie du carter de palier (34).

3. Passage de colonne de direction selon la revendication 1 ou 2, **caractérisé en ce que** le carter de palier (34) est pourvu à l'intérieur dans le plan radial d'un premier étai (36) périphérique an niveau de la périphérie, ledit étai étant disposé dans le plan axial entre les chambres d'amortissement (40, 42) et étant agencé de façon à s'étendre dans le plan radial presque jusqu'à la colonne de direction (12).

4. Passage de colonne de direction selon l'une quelconque des revendications 1 à 3, **caractérisé en ce que** le premier soufflet (28) et le troisième soufflet (32) sont couplés au carter de palier (34) au moyen d'une surpression.

5. Passage de colonne de direction selon l'une quelconque des revendications 1 à 4, **caractérisé en ce que** le deuxième soufflet (30) est couplé au carter de palier (34) par complémentarité de forces et/ou de formes.

6. Passage de colonne de direction selon l'une quelconque des revendications 1 à 5, **caractérisé en ce qu'**au moins une première bague coulissante (62, 64) est insérée à l'intérieur dans le plan radial dans le carter de palier (34), ladite bague étant notamment agencée avec une section transversale rectangulaire.

7. Passage de colonne de direction selon la revendication 6, **caractérisé en ce que** la première bague coulissante (62, 64) est retenue dans le plan axial dans le carter de palier (34) par un premier cache de palier (66, 68) en forme de bague, le premier cache de palier (66, 68) étant pourvu à l'intérieur dans le plan radial d'un deuxième étai (70) périphérique au niveau de la périphérie, ledit étai étant agencé de façon à s'étendre dans le plan radial jusqu'à la colonne de direction (12).

8. Passage de colonne de direction selon l'une quelconque des revendications 1 à 7, **caractérisé en ce que** le premier soufflet (28) et le deuxième soufflet (30) sont réalisés sous la forme d'un composant réalisé d'un seul tenant.

9. Passage de colonne de direction selon l'une quelconque des revendications 1 à 8, **caractérisé en ce que** les soufflets (28, 30, 32) sont réalisés à partir d'une matière élastique, notamment d'un caoutchouc éthylène-propylène-diène (EPDM), que le carter de palier (34) est réalisé à partir d'une matière non élastique, notamment le polyoxyméthylène (POM), que la première bague coulissante (62, 64) est réalisée à partir d'une matière non élastique, notamment le polytéréphtalate de butylène (PBT) et/ou que le premier cache de palier (66, 68) est réalisé à partir d'une matière non élastique, notamment le polyphthalamide (PPA).
